# FASCICULE DE BREVET EUROPEEN

(11) **EP 3 686 788 B1**
(45) Date de publication et mention de la délivrance du brevet: **01.04.2026**
(21) Numéro de dépôt: 20152650.6
(22) Date de dépôt: 20.01.2020
(51) Int. Cl.: H04L 9/32, G06V 40/12

(54) **PROCÉDÉ DE VÉRIFICATION D'UNE AUTHENTIFICATION BIOMÉTRIQUE**
ÜBERPRÜFUNGSVERFAHREN EINER BIOMETRISCHEN AUTHENTIFIZIERUNG
METHOD FOR VERIFYING A BIOMETRIC AUTHENTICATION

(30) Priorité: 22.01.2019 FR 1900543
(43) Date de publication de la demande: 29.07.2020
(73) Titulaire: IDEMIA Public Security France, 92400 Courbevoie (FR)
(72) Inventeur: ADJAZ, Aghiles, 92400 COURBEVOIE (FR); KEUFFER, Julien, 92400 COURBEVOIE (FR)
(74) Mandataire: IPS

(56) Documents cités:
- EP-A1- 3 468 096
- EP-A1- 3 547 270
- WO-A1-2018/222211
- US-A1- 2012 204 035
- US-A1- 2015 318 994
- CHABANNE HERVE ET AL: "A Verifiable System for Automated Face Identification", 2016 INTERNATIONAL CONFERENCE OF THE BIOMETRICS SPECIAL INTEREST GROUP (BIOSIG), GESELLSCHAFT FUER INFORMATIK, 21 September 2016 (2016-09-21), pages 1 - 5, XP032995276, DOI: 10.1109/BIOSIG.2016.7736907
- CHABANNE HERV� ET AL: "Delegating Biometric Authentication with the Sumcheck Protocol", 17 September 2016, INTERNATIONAL CONFERENCE ON FINANCIAL CRYPTOGRAPHY AND DATA SECURITY; [LECTURE NOTES IN COMPUTER SCIENCE; LECT.NOTES COMPUTER], SPRINGER, BERLIN, HEIDELBERG, PAGE(S) 236 - 244, ISBN: 978-3-642-17318-9, XP047355453

## Description

### DOMAINE DE L'INVENTION

L'invention concerne un procédé de traitement de données biométriques, comprenant la comparaison entre une donnée biométrique candidate et au moins une donnée biométrique de référence.

L'invention s'applique notamment à la vérification d'une authentification biométrique mise en œuvre par un équipement personnel d'un individu et non par une unité de traitement considérée digne de confiance comme une unité de traitement gouvernementale.

### ETAT DE LA TECHNIQUE

On connaît déjà des schémas d'identification ou d'authentification dans lesquels une donnée biométrique fraîche est acquise sur un utilisateur (sur un dispositif « client », i.e. une borne ou un équipement personnel tel qu'un smartphone), et une unité de traitement digne de confiance, par exemple à un serveur central d'un bâtiment dans lequel l'utilisateur souhaite pénétrer, la confronte à une ou plusieurs donnée(s) biométrique(s) de référence enregistrée(s) dans une base de données à laquelle elle a accès.

Ce scénario présente l'avantage que le résultat de la comparaison entre les données biométriques est réputé fiable car la comparaison est mise en œuvre par une unité de confiance. Cependant, cette solution pose un problème de confidentialité des données personnelles des utilisateurs (ces derniers doivent accepter que leurs données soient stockées par le serveur centralisé), et de surcroit présente un grave risque de compromission de la biométrie de tous les utilisateurs en cas de piratage de la base de données du serveur centralisé.

Pour éviter ce type de désagrément, on pourrait envisager un scénario alternatif dans lequel l'utilisateur s'authentifierait ou s'identifierait directement à l'aide de l'équipement client, et fournirait seulement au serveur en charge du contrôle le résultat de cette authentification ou identification.

Ainsi, il a été proposé une architecture « décentralisée », dans laquelle la donnée biométrique de référence de l'utilisateur reste en sa possession (sur l'équipement personnel) et il ne la partage pas avec le serveur central. Le serveur centralisé attribue une clé privée à chaque utilisateur, stockée de manière sécurisé sur l'équipement client. La comparaison positive entre la donnée biométrique de référence et la donnée acquise permet d'activer la signature d'un message (à l'aide de sa clé privé) à destination du serveur centralisé. Cette architecture est respectueuse en termes de données personnelle des utilisateurs, cependant elle présente toujours une faille de sécurité car une attaque sur le serveur central l'obtention d'une ou plusieurs clés) pourrait permettre de forger des messages en les associant à des utilisateurs légitimes sans que le serveur centralisé ne puisse les détecter.

De surcroit, si la comparaison est réalisée par un équipement client totalement personnel tel qu'un smartphone et donc manipulable, se pose le problème de la fiabilité du résultat de l'authentification ou de l'identification, et notamment du résultat de la comparaison entre les données biométriques qui a permis à l'utilisateur de s'authentifier ou de s'identifier. Il est en effet nécessaire de proposer un moyen pour que le serveur central en charge du contrôle puisse vérifier que le résultat est correct et que l'utilisateur n'a pas réalisé de fraude ou d'erreur dans la mise en oeuvre de la comparaison des données biométriques.

Il a ainsi été récemment proposé dans la demande FR1759292 une solution très astucieuse dans laquelle l'utilisation d'une preuve à divulgation nulle de connaissance bien choisie permet de garantir le résultat de la comparaison au niveau de l'équipement de l'utilisateur, tout en ne donnant qu'un rôle de vérifieur aux équipements en charge du contrôle, rôle qui ne nécessite pas la connaissance des données biométriques, mais seulement de leurs empreintes cryptographiques. Il n'est donc plus nécessaire de transmettre sous quelque forme que soit les données biométriques et le respect de la vie privée de l'utilisateur est donc total.

Cette solution apporte satisfaction totale dans des situations telles qu'un franchissement de douane dans un aéroport, mais s'avère perfectible dans une application plus générale de contrôle d'accès récurrent : en effet, il est nécessaire de transmettre la donnée biométrique candidate dans un sens ou dans l'autre (il est nécessaire que chacun du serveur et de l'équipement client en dispose), et une telle transmission pourrait être interceptée et déchiffrée. Cela ne pose pas de problème dans le cas d'un passage unique (cas de l'aéroport) mais pourrait permettre à un attaquant une usurpation d'identité dans le cas d'un passage récurrent (cas d'un salarié s'authentifiant tous les jours pour entrer dans les locaux de son entreprise).

Il serait par conséquent souhaitable de disposer d'un nouveau procédé de traitement de données biométriques pour l'authentification déléguant le calcul à un équipement personnel de l'utilisateur, qui soit totalement fiable, rapide, efficace, tout en protégeant complètement la vie privée de l'utilisateur.

Le document suivant est considéré comme faisant parti de l'état de l'art: WO 2018/222211 A1 (VISA INT SERVICE ASS [US]) 6 décembre 2018 (2018-12-06).

### PRESENTATION DE L'INVENTION

Selon un premier aspect, l'invention concerne un procédé de traitement de données biométriques selon la revendication 1.

Selon d'autres caractéristiques avantageuses et non limitatives :
- l'entité de preuve ne dispose initialement que de la donnée biométrique de référence et de l'empreinte cryptographique de la donnée biométrique de référence, le procédé comprenant la mise en œuvre par les moyens de traitement de données de l'entité de preuve d'une étape préalable (a1) de :
   ∘ génération de la donnée biométrique candidate à partir d'un trait biométrique fourni par des moyens d'acquisition biométrique de l'entité de preuve, et
   ∘ génération de l'empreinte cryptographique de la donnée biométrique candidate obtenue ;
- l'étape (a1) comprend l'horodatage par les moyens de traitement de données de l'entité de preuve de la donnée biométrique candidate en utilisant un marqueur temporel, l'empreinte cryptographie générée à l'étape (a1) et transmise à l'étape (b) étant celle de la donnée biométrique candidate horodatée ;
- ledit marqueur temporel est un nonce généré par les moyens de traitement de données de l'entité de vérification et transmis à l'entité de preuve ;
- ladite preuve à divulgation nulle de connaissances du fait que la donnée biométrique candidate et la donnée biométrique de référence coïncident est une preuve à divulgation nulle de connaissances du fait qu'étant données deux empreintes cryptographiques et un marqueur temporel, il existe une donnée biométrique de référence et une donnée biométrique candidate telles que :
   ∘ La donnée biométrique de référence et la donnée biométrique candidate horodatée en utilisant le marqueur temporel donné ont pour empreintes cryptographiques respectives les empreintes cryptographiques données,
   ∘ La donnée biométrique de référence et la donnée biométrique candidate coïncident ;
- Le procédé comprend une étape encore antérieure (a0) mise en œuvre de :
   ∘ génération par des moyens de traitement de données d'une entité d'autorité de ladite donnée biométrique de référence à partir d'un trait biométrique de référence, et sa transmission à l'entité de preuve ;
   ∘ Ajout audit ensemble d'empreintes cryptographiques de données biométriques de référence d'utilisateurs autorisés de l'empreinte cryptographique de la donnée biométrique de référence générée ;
- l'étape (a0) comprend en outre la génération par les moyens de traitement de données de l'entité d'autorité de l'empreinte cryptographique de ladite donnée biométrique de référence générée, et sa transmission à l'entité de preuve ; et la retransmission par l'entité de preuve à l'entité de vérification de ladite empreinte cryptographique générée de ladite donnée biométrique de référence générée, pour ajout audit ensemble d'empreintes cryptographiques de données biométriques de référence d'utilisateurs autorisés ;
- l'entité de preuve est un équipement électronique personnel à un individu faisant partie des utilisateurs autorisés, de type terminal mobile ou carte à puce, la donnée biométrique de référence stockée dans l'entité de preuve étant celle dudit individu ;
- chacun desdits utilisateurs autorisés dispose de sa propre entité de preuve ;
- le trait biométrique de référence à partir duquel ladite donnée biométrique de référence est générée à l'étape (a0) est celui de l'individu ayant l'entité de preuve ;
- la preuve à divulgation nulle de connaissances est un objet cryptographique de type zkSNARK ;
- l'étape (a) comprend la vérification préalable que la donnée biométrique candidate et la donnée biométrique de référence coïncident, la donnée biométrique candidate et la donnée biométrique de référence coïncidant si leur distance selon une fonction de comparaison donnée est inférieure à un seuil prédéterminé.

Selon un deuxième aspect est proposé un ensemble d'équipements de traitement de données biométriques selon la revendication 12.

Selon d'autres caractéristiques avantageuses et non limitatives, l'entité de preuve comprend des moyens d'acquisition biométrique, les moyens de traitement de données de l'entité de preuve étant en outre configurés pour générer la donnée biométrique candidate à partir d'un trait biométrique fourni par les moyens d'acquisition biométrique et l'empreinte cryptographique de la donnée biométrique candidate obtenue.

Selon un troisième et un quatrième aspect, l'invention propose un produit programme d'ordinateur comprenant des instructions de code pour l'exécution d'un procédé selon le premier aspect de traitement de données biométriques ; et un moyen de stockage lisible par un équipement informatique sur lequel un produit programme d'ordinateur comprend des instructions de code pour l'exécution d'un procédé selon le premier aspect de traitement de données biométriques.

### DESCRIPTION DES FIGURES

D'autres caractéristiques, buts et avantages de la présente invention apparaîtront à la lecture de la description détaillée qui va suivre, au regard des figures annexées, données à titre d'exemples non limitatifs et sur lesquelles :
[Fig. 1] La figure 1 représente schématiquement un système pour la mise en œuvre du procédé selon l'invention,

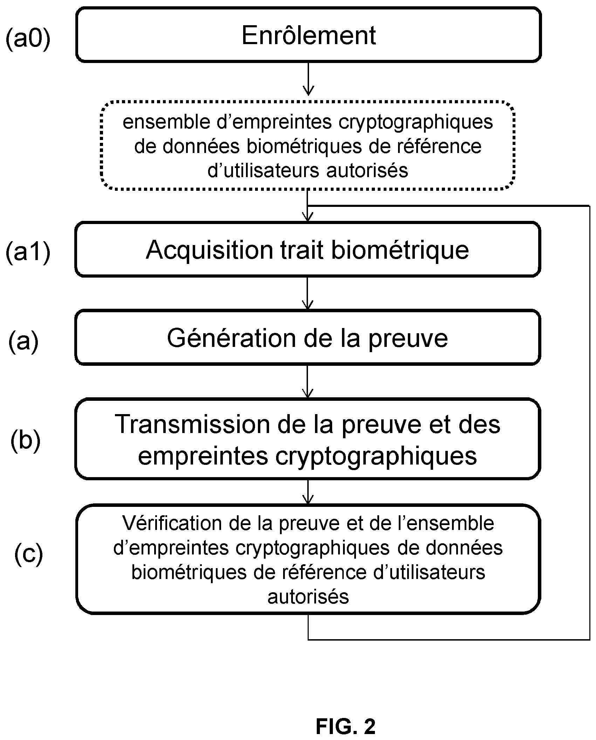

[Fig. 2] La figure 2 représente schématiquement un mode de réalisation préféré du procédé selon l'invention.

### DESCRIPTION DETAILLEE D'AU MOINS UN MODE DE REALISATION DE L'INVENTION

### Architecture

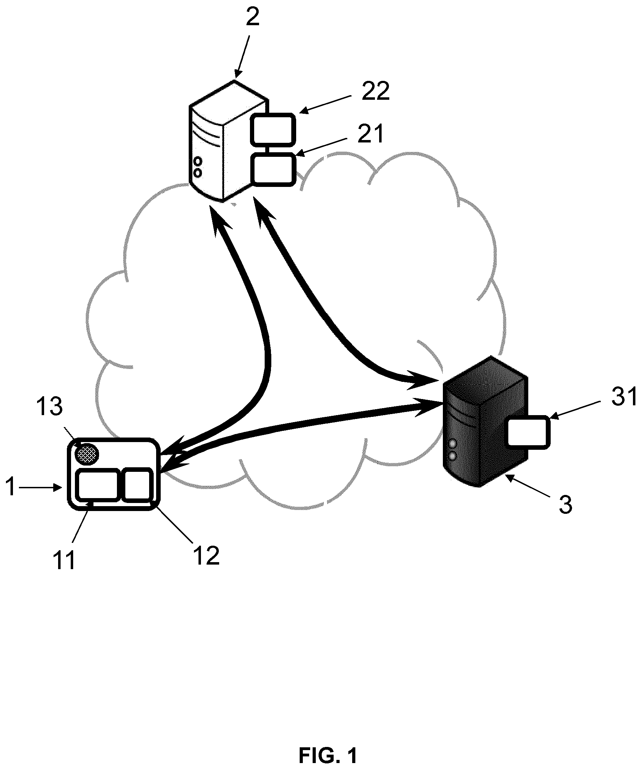

En référence à la **figure 1****,** on a représenté schématiquement un système pour l'authentification biométrique d'individus permettant une vérification du résultat de l'authentification.

Ce système comprend au moins deux équipements 1, 2. Le premier équipement 1 est l'équipement client, préférentiellement un équipement personnel à un individu, comme par exemple un téléphone mobile ou « smartphone », une tablette électronique, un ordinateur personnel ou encore une carte à puce, comme expliqué ci-après, mais ce peut également être un équipement partagé tel qu'une borne d'accès. Il peut y avoir une pluralité de premiers équipements 1, a fortiori s'ils sont personnels.

Le deuxième équipement 2 est un serveur détenu et contrôlé par une entité auprès de qui l'authentification doit être effectuée, par exemple une entité gouvernementale, douanière, une entreprise, etc. Dans la suite de la présente description on prendra l'exemple d'un serveur de contrôle d'accès d'un ou plusieurs bâtiments (par exemple celui d'une entreprise), mais on notera que le présent procédé reste utilisable dans de très nombreuses situations, par exemple pour authentifier un individu souhaitant mettre en œuvre une transaction (la carte à puce pourrait être une carte de paiement).

Comme l'on verra, on considèrera alors en particulier que l'on dispose d'une liste d'utilisateurs autorisés (typiquement les salariés de ladite entreprise).

L'un des équipements met en œuvre une authentification/identification sur des données biométriques, et fournit ensuite le résultat à l'autre, qui procède à la vérification de ce résultat. A ce titre, selon un schéma connu, le premier équipement 1 est une entité, dite de preuve, qui met en œuvre l'authentification/identification et fournit le résultat au deuxième équipement 2 qui vérifie ce résultat, dit entité de vérification.

Le premier équipement 1 comporte des moyens de traitement de données 11, i.e. un calculateur tel que par exemple un processeur, un microprocesseur, un contrôleur, un microcontrôleur, un FPGA etc. Ce calculateur est adapté pour exécuter des instructions de code pour mettre en œuvre le procédé ci-après. Dans le mode de réalisation où le premier équipement 1 est une carte à puce, il peut comprendre outre la « puce » un processeur dédié pour mettre en œuvre plus efficacement le traitement des données biométriques.

Le premier équipement 1 comprend avantageusement une interface de communication lui permettant de dialoguer à distance avec le deuxième équipement 2 et d'autres équipements tel qu'un troisième équipement 3 qui est une entité dite d'autorité (par exemple le poste de travail d'un administrateur ou d'un agent gouvernemental). A noter que l'entité de vérification 2 et l'entité d'autorité 3 peuvent être confondues, même s'il est préférable de les séparer pour limiter les risques de fraude.

Le premier équipement 1 peut également comprendre des moyens de stockage de données 12 (une mémoire, par exemple flash), des moyens d'acquisition biométrique 13 (voir plus loin), et éventuellement une interface utilisateur (typiquement un écran tactile).

Cette interface de communication est de préférence une interface de communication sans fil, par exemple de type Wifi ou Bluetooth ou réseau de téléphonie mobile (GPRS, 3G, 4G ou autre) ou communication en champ proche NFC et/ou de tout autre réseau de communication aval.

Le deuxième équipement 2 (et le cas échéant le troisième équipement 3) comporte quant à lui également des moyens de traitement de données 21 (respectivement 31), i.e. un calculateur tel que par exemple un processeur, un microprocesseur, un contrôleur, un microcontrôleur, un FPGA etc. Ce calculateur est adapté pour exécuter des instructions de code pour mettre en œuvre le procédé ci-après. Le deuxième équipement 2 comprend également typiquement une mémoire 22.

Ces autres équipements 2, 3 comprennent avantageusement eux aussi des interfaces de communication leur permettant de dialoguer à distance entre eux et avec le premier équipement 1.

Le deuxième équipement 2 et le troisième équipement 3 sont typiquement disposés à proximité (par exemple dans le bâtiment à sécuriser), et peuvent être à ce titre connectés filialement, ou bien être des équipements distants (par exemple pour contrôler plusieurs sites).

De façon préférée, le premier équipement 1 est capable de générer une donnée biométrique à partir d'un trait biométrique d'un individu. Le trait biométrique peut par exemple être la forme du visage, une empreinte digitale, une empreinte palmaire, un iris de l'individu, etc. L'extraction de la donnée biométrique est mise en œuvre par un traitement de l'image du trait biométrique qui dépend de la nature du trait biométrique. Des traitements d'images variés pour extraire des données biométriques sont connus de l'Homme du Métier. A titre d'exemple non limitatif, l'extraction de la donnée biométrique peut comprendre une extraction de points particuliers ou d'une forme du visage dans le cas où l'image est une image du visage de l'individu.

Le premier équipement 1 comprend à ce titre des moyens d'acquisition biométrique 13, typiquement un capteur d'image, par exemple un appareil photographique numérique ou un capteur d'empreinte digitale, adapté pour acquérir au moins une image d'un trait biométrique d'un individu. Dans l'exemple de la figure 1, l'équipement 1 est une carte à puce personnelle avec un capteur d'empreinte digitale 13.

Dans tous les cas, la donnée biométrique de référence utilisée pour l'authentification est avantageusement une donnée pré-enregistrée en présence d'une autorité (voir plus loin), ou une donnée provenant d'un document d'identité de l'individu (image du visage figurant sur un document d'identité, ou encore une image du visage ou d'au moins un iris de l'individu enregistré dans une puce radiofréquence contenue dans le document).

On note que le deuxième équipement 2 ne dispose jamais de données biométriques d'aucune sorte, de sorte à garantir la vie privée des utilisateurs et prévenir tout risque de fuite de données personnelles même en cas de piratage.

Dans un mode de réalisation préféré, l'équipement 1 est personnel (terminal mobile ou carte à puce de l'individu) et met en œuvre une authentification de l'individu, c'est-à-dire compare une donnée biométrique dite candidate, car fraichement acquise sur l'individu, à une seule biométrique dite de référence, censée provenir du même individu, afin de vérifier que l'individu à partir duquel ont été obtenues les deux données est bien le même. En effet, de façon préférée l'équipement 1 ne contient que la donnée biométrique de référence de l'individu auquel il appartient. On suppose que ledit individu (à qui un premier équipement 1 est confié pour son authentification personnelle) fait partie des utilisateurs autorisés, et ainsi dans un tel mode de réalisation, chacun des utilisateurs autorisés du système dispose avantageusement d'un équipement 1 propre.

Dans un autre mode de réalisation, l'équipement 1 n'est pas personnel (par exemple une borne d'accès) et met en œuvre une identification de l'individu, c'est-à-dire compare la donnée biométrique candidate, à plusieurs données biométriques de référence d'individus autorisés, de sorte à déterminer qui est l'individu à partir duquel a été obtenue la donnée biométrique candidate (et s'il est autorisé). On peut cependant prévoir que l'individu déclare son identité sur l'équipement 1 (par exemple en utilisant une carte à puce personnelle), et que ce dernier mette alors en œuvre de l'authentification, i.e. compare la donnée biométrique candidate avec uniquement la donnée biométrique de référence associée à l'individu déclaré.

On préférera le premier mode de réalisation (équipement personnel), dans la mesure où il prévient tout risque de fuite de données personnelles (même si un utilisateur se fait voler son équipement personnel, au pire on peut accéder à sa donnée biométrique de référence, mais pas celle des autres utilisateurs : il suffit alors de renouveler cette donnée biométrique de référence pour continuer le fonctionnement nominal, sans aucun impact pour les autres utilisateurs).

Un cas d'application est le franchissement d'un portique de contrôle d'accès par un salarié à l'entrée d'un bâtiment d'une entreprise. Celui-ci peut utiliser son équipement personnel pour réaliser une authentification biométrique juste avant d'entrer dans le bâtiment. Puis, au moment d'atteindre le portique de contrôle d'accès, l'individu fournit le résultat au deuxième équipement 2 agissant en tant qu'entité de vérification au moyen de son équipement personnel 1. L'entité de vérification 2 ne procède alors qu'à la vérification (par exemple, si le premier équipement 1 est une carte à puce, en passant cette carte à proximité d'un lecteur NFC monté sur le portique).

### Enrôlement

Comme expliqué, le présent procédé vise à ce que le second équipement 2 (l'entité de vérification) n'ait besoin que de se voir présentée une preuve de l'authentification de l'individu, mais pas de données biométriques.

Ainsi, le prédicat de base est qu'au lancement du procédé l'entité de preuve (le premier équipement 1) dispose d'une donnée biométrique candidate, d'une donnée biométrique de référence, d'une empreinte cryptographique de la donnée biométrique de référence, d'une empreinte cryptographique de la donnée biométrique candidate, et que l'entité de vérification (le deuxième équipement 2) dispose seulement d'un ensemble d'empreintes cryptographiques de données biométriques de référence d'utilisateurs autorisés (stockée dans sa mémoire 22).

Plus précisément, l'idée est que le deuxième équipement 2 dispose pour chacun d'une liste d'utilisateurs autorisés (par exemple tous les salariés) de l'empreinte cryptographique de leur donnée biométrique de référence, de sorte à constituer un index infalsifiable des utilisateurs autorisés, sans pour autant dévoiler d'information sensible aussi bien en termes de données personnelles qu'en termes de sécurité. Plus précisément, si pour une donnée biométrique de référence son empreinte appartient audit ensemble d'empreintes, c'est que l'utilisateur correspondant est autorisé. Cela implique naturellement que l'utilisateur et l'entité auprès de qui il s'identifie se soient mis d'accord sur la donnée biométrique de référence, mais en pratique cela ne pose pas de problème.

On va voir que cette astuce permet d'éviter tout transfert de donnée biométrique « entière ». Par contraste, dans le procédé décrit dans la demande FR1759292 le deuxième équipement 2 devait disposer de l'empreinte cryptographique de la donnée biométrique candidate, et une transmission de la données biométrique candidate était nécessaire.

Selon une première possibilité, le deuxième équipement 2 ne dispose que de l'ensemble d'empreintes cryptographiques « en tant que tel », i.e. chacune d'entre elles n'est associée à aucune identité, ce qui garantit une protection maximale de la vie privée (on n'est pas capable de savoir quel utilisateur s'authentifie). Selon une deuxième possibilité, chaque empreinte cryptographique dudit ensemble est associée à un élément d'identité en clair, par exemple le nom de la personne présentant la donnée biométrique de référence correspondante. Cette possibilité est moins respectueuse de la vie privée, mais offre un niveau de sécurité supplémentaire, car elle permet de constituer un historique des authentifications. Une troisième possibilité, préférée et qui sera décrite plus en détail plus loin, consiste à associer aux utilisateurs autorisés des identifiants anonymisés, grâce auquel on va référencer ledit ensemble d'empreintes cryptographiques. Plus précisément, il s'agit alors d'un ensemble de couples d'un identifiant unique et d'une d'empreinte cryptographique d'une donnée biométrique de référence. Cela permet à la fois une traçabilité et un respect de la vie privée.

Par « empreinte cryptographique » d'une donnée biométrique (appelé également « condensat » ou « haché » de la donnée, de l'anglais « hash »), obtenue en appliquant une fonction de hachage cryptographique à la donnée (typiquement des familles SHA-1 ou SHA-2, en particulier SHA-256). L'empreinte a une taille fixe et ne révèle rien sur la donnée dont elle est issue : on ne peut pas retrouver la donnée biométrique à partir de cette empreinte, en tout cas tant que la fonction de hachage utilisée est considérée comme sûre. On peut cependant recalculer l'empreinte à partir de la donnée pour vérifier qu'elle est correcte. L'empreinte de la donnée biométrique peut ainsi être transmise à tout équipement sans dévoiler d'information sur la donnée en elle-même et donc sur la vie privée de l'utilisateur correspondant.

Dans un mode de réalisation préféré, le procédé comprend une étape préalable (a0) « d'enrôlement » permettant d'intégrer un individu à la liste des utilisateurs autorisés (un nouveau salarié par exemple), et ainsi la constitution progressive dudit ensemble d'empreintes cryptographiques de données biométriques de référence chacune associée à un utilisateur autorisé sur le deuxième équipement 2.

Cette étape peut être mise en œuvre longtemps avant le reste du procédé, et ne nécessite pas d'être réitérée à chaque occurrence du procédé (à noter qu'on peut prévoir de la répéter de temps à autre par sécurité et pour mettre à jour la biométrie des utilisateurs, mais cela reste optionnel). On peut ainsi considérer que ledit ensemble d'empreintes cryptographiques de données biométriques de référence d'utilisateurs autorisés est prédéfini pour la mise en œuvre du procédé.

Typiquement, cette étape est initiée au niveau de l'entité d'autorité 3 et comprend :
∘ La génération par les moyens de traitement de données 31 de l'entité d'autorité 3 de ladite donnée biométrique de référence à partir d'un trait biométrique de référence (en particulier celui de l'individu auquel est attribuée l'entité de preuve 1 si celle-ci est un dispositif personnel), et transmission à l'entité de preuve 1 (pour stockage), ainsi que de l'empreinte cryptographique de cette donnée biométrique de référence (toujours par application d'une fonction de hachage donnée) ;
∘ L'ajout audit ensemble d'empreintes cryptographiques de données biométriques de référence d'utilisateurs autorisés (de l'entité de vérification 2) de l'empreinte cryptographique de la donnée biométrique de référence générée.

On comprend que l'étape (a0) comprend une transmission d'une donnée biométrique (celle de référence), mais dans la mesure où cette étape n'a besoin d'être effectuée qu'une unique fois, et ce en présence d'une autorité, le risque d'interception est quasi nul. Pour garantir une sécurité totale, on peut exiger par exemple un contact physique pour transmettre la donnée biométrique, par exemple si l'équipement 1 est une carte à puce, en l'insérant dans un lecteur.

A noter que soit l'empreinte cryptographique générée par l'entité d'autorité 3 est soit également transmise à l'entité de preuve 1, soit cette dernière la génère directement à partir de la donnée biométrique de référence reçue. Par ailleurs, cette étape peut comprendre la génération d'un identifiant unique de l'individu (pour association avec l'empreinte cryptographique de la donnée biométrique de référence générée).

Par ailleurs cette étape peut comprendre la transmission à l'entité de preuve d'une clé de preuve (on suppose qu'une paire d'une clé de preuve et d'une clé de vérification sont pré-générées, typiquement dépendantes du programme de vérification et sont indépendantes des biométries des utilisateurs (tous les utilisateurs auront la même clé de preuve). La clé de vérification est stockée par l'équipement de vérification 2. A noter que ces clés ne sont pas sensibles et peuvent être publiques.

Ledit trait biométrique de référence peut être celui associé à un document officiel (en particulier un document d'identité tel qu'un passeport ou une carte d'identité), ou un trait acquis directement acquis par des moyens d'acquisition biométrique de l'entité d'autorité.

Par exemple, on peut envisager que pour l'enrôlement, le nouvel utilisateur se rend auprès d'un administrateur, un officier de sécurité ou un représentant de l'état qui vérifie son identité et prend son empreinte digitale en tant que trait biométrique de référence.

A noter que l'étape (a0) peut comprendre l'obtention d'une signature de la donnée biométrique de référence, de son empreinte cryptographique, et/ou de l'identifiant unique correspondant par l'autorité (à nouveau un administrateur par exemple).

La signature électronique de la donnée permet de garantir son intégrité et ce de façon définitive (non-répudiation), par analogie avec la signature manuscrite d'un document papier, et est bien connue de l'homme du métier. Elle est générée par l'entité d'autorité 3 et consiste généralement en un chiffré d'une empreinte de l'objet à signer. Pour cela, les moyens de traitement de données 31 de l'entité d'autorité 3 appliquent par exemple une fonction de chiffrement asymétrique à au moins l'empreinte et la retransmettent ainsi chiffrée au premier équipement 1 en tant que signature.

Selon un mode particulièrement préféré, dans lequel on appelle H la fonction de hachage et on suppose que l'entité d'autorité 3 dispose d'une clé privée de signature *sₖ* et d'une clé de preuve *ek_{f}* et que l'entité de vérification 2 dispose d'une clé publique de signature *pₖ* et d'une clé de vérification *vk_{f}* (ces dernières peuvent être générées au niveau de l'entité d'autorité 3 et transmises sans problème à l'entité de vérification 2, elles ne sont pas sensibles) :
- les moyens de traitement de données 31 de l'entité d'autorité signent la paire *(h_{1,i},idᵢ)* constituée de l'empreinte cryptographique *h_{1,i} = H(t_{ref,i})* de la donnée de référence générée *t_{ref,i}* et de l'identifiant unique *idᵢ* correspondant, et transmettent à l'entité de preuve 1 la paire *(h_{1,i}idᵢ),* sa signature *σ*, et la clé de preuve *ek_{f}* ;
- l'entité de preuve 1 les stocke, et renvoie les trois éléments *h_{1,i},idᵢ, σ* à l'entité de vérification 2 ;
- les moyens de traitement 21 de l'entité de vérification 2 vérifient la signature *σ* au moyen de la clé publique *pₖ,* et si la vérification est concluante la paire *(h_{1,i},idᵢ)* est ajoutée à l'ensemble d'empreintes cryptographiques des données biométriques de référence des utilisateurs autorisés.

De façon générale, on comprendra que l'étape (a0) pourra être mise en œuvre de n'importe quelle façon permettant de façon sécurisée de constituer l'ensemble d'empreintes cryptographiques des données biométriques de référence des utilisateurs autorisés, et de fournir au premier équipement 1 la donnée biométrique de référence correspondante.

### Obtention de la donnée biométrique candidate

On va maintenant décrire un procédé d'authentification/identification mis en œuvre par le système décrit ci-avant.

On suppose comme expliqué que le premier équipement 1 dispose d'une donnée biométrique candidate, d'une donnée biométrique de référence, d'une empreinte cryptographique de la donnée biométrique candidate, d'une empreinte cryptographique de la donnée biométrique de référence, et éventuellement d'une signature de la donnée biométrique de référence par une autorité de confiance. Comme expliqué, ces dernières peuvent être obtenues préalablement lors d'une étape (a0) d'enrôlement.

En ce qui concerne la donnée biométrique candidate, « fraîche », celle-ci peut être obtenue lors d'une étape préalable (a1). En d'autres termes, l'entité de preuve 1 peut ne disposer initialement (i.e. à l'issue de l'étape (a0)) que de la donnée biométrique de référence et de l'empreinte cryptographique de la donnée biométrique de référence.

Il est important de comprendre que si l'étape d'enrôlement (a0) peut être mise en œuvre des semaines avant la mise en œuvre de l'authentification, l'étape (a1) est au pire mise en œuvre quelques minutes avant le reste du procédé, pour garantir la « fraicheur » de la donnée biométrique candidate.

L'étape (a1) est mise en œuvre par les moyens de traitement de données 11 du premier équipement 1 (l'entité de preuve), et comprend tout d'abord la génération de la donnée biométrique candidate à partir d'un trait biométrique fourni par des moyens d'acquisition biométrique 13 de l'entité de preuve 1.

L'empreinte cryptographique de la donnée biométrique candidate obtenue est ensuite générée. A ce stade, l'entité de preuve 1 ne transmet aucun élément à l'entité de vérification 2, et a fortiori aucune donnée biométrique. Ainsi il n'y a rien à intercepter.

De façon préférée, pour garantir la fraicheur de la donnée candidate, l'étape (a1) comprend l'horodatage de la donnée biométrique candidate au moyen d'un marqueur temporel (appelé « timestamp » en anglais), l'empreinte cryptographie générée étant celle de la donnée biométrique candidate horodatée.

L'homme du métier saura mettre en œuvre un tel horodatage en utilisant des techniques connues, et avantageusement on utilise comme marqueur temporel un nonce (i.e. un nombre arbitraire, c'est-à-dire un aléa, à usage unique, de l'anglais « number used once »).

Plus précisément, de manière préférée, sur requête de l'entité de preuve 1 (par exemple en lui envoyant son identifiant unique *idᵢ*), les moyens de traitement de données 21 de l'entité de vérification 2 génèrent un nonce *Nonce_{B,i}* ∈ {0,1}*^{l}* et le transmettent à l'entité de preuve 1. Alors, en notant *t_{c,i}* la donnée biométrique candidate acquise, les moyens de traitement de données 11 de l'entité de preuve génèrent l'empreinte cryptographique *h_{2,i} = H*(*t_{c,i}*∥*Nonce_{B,i})* de la donnée biométrique candidate horodatée *t_{c,i}*∥*Nonce_{B,i}.*

On remarque que les seuls éléments échangés sont au pire un identifiant unique et le nonce, qui ne sont pas sensibles. A noter que si on veut éviter toute interactivité, l'entité de vérification 2 peut par exemple broadcaster des nonces à intervalles réguliers, par exemple un toutes les minutes. On peut même envisager le même générateur de nonces installé sur l'entité de preuve 1 et l'entité de vérification 2 (les deux générateurs étant synchronisés et utilisant un même secret), de sorte qu'à un instant donné le même nonce soit disponible sur les deux équipements.

### Procédé d'authentification

La partie authentification du présent procédé est non-interactive, c'est-à-dire qu'il ne nécessite qu'un « aller » d'information de l'entité de preuve 1 vers l'entité de vérification 2, et pas de « retour ». Et surtout comme expliqué, l'entité de vérification ne va recevoir ni la donnée biométrique candidate ni la donnée biométrique candidate (ni aucune donnée permettant de remonter jusqu'à ces dernières), bien qu'il soit pourtant possible pour l'entité de vérification de savoir avec certitude si les données biométriques candidate et de référence coïncident. De surcroit, toutes les données transmises ne sont pas sensibles, et pourraient être interceptées sans que cela ne pose de problème.

Pour cela, on utilise un protocole cryptographique générant une « preuve » que la donnée biométrique candidate et la donnée biométrique de référence coïncident, cette preuve ne révélant rien d'autre que le fait que ces données biométriques sont bien possédées par le producteur de la preuve.

Le protocole Pinocchio présenté dans la publication « Bryan Parno, Craig Gentry, Jon Howell, and Mariana Raykova, Pinocchio: Nearly Practical Verifiable Computation, in Proceedings of the IEEE Symposium on Security and Privacy, IEEE, 21 May 2013 » a été un des premiers protocoles de calcul vérifiable permettant à l'exécutant de calculer de manière vérifiable l'application d'une fonction quelconque et au donneur d'ordre de vérifier la preuve associée en un temps de calcul inférieur à celui nécessaire pour réaliser le calcul lui-même.

Dans une première étape (a), les moyens de traitement de données 11 de l'entité de preuve 1 génèrent pour cela d'une preuve à divulgation nulle de connaissances du fait que la donnée biométrique candidate et la donnée biométrique de référence coïncident, avantageusement en utilisant la clé de preuve fournie lors de l'enrôlement.

Plus précisément, ladite preuve à divulgation nulle de connaissances garantit l'affirmation suivante : « étant données deux empreintes cryptographiques, il existe une donnée biométrique de référence et une donnée biométrique candidate ayant pour empreintes cryptographiques respectives les empreintes cryptographiques données, et coïncidant ».

Dans le cas où l'on a utilisé un marquer temporel tel qu'un nonce, la preuve à divulgation nulle de connaissance garantit plus précisément l'affirmation suivante : « étant données deux empreintes cryptographiques *h_{1,i}, h_{2,i}* et un nonce *Nonce_{B,i},* il existe une donnée biométrique de référence *t_{ref,i}* et une donnée biométrique candidate *t_{c,i}* telles que la donnée biométrique de référence *t_{ref,i}* et la données biométrique candidate horodatée avec le nonce *t_{c,i}*∥*Nonce_{B,i}* ont pour empreintes cryptographiques respectives les empreintes cryptographiques données, i.e. *h_{1,i} = H(t_{ref,i})* et *h_{2,i} = H(t_{c,i}*∥*Nonce_{B,i}),* et coïncidant ».

Ainsi, on peut lier les deux empreintes cryptographiques aux données biométriques candidate et de référence mais on ne peut pas obtenir d'informations sur le contenu de ces données biométriques. Le protocole cryptographique donne une preuve rapide à vérifier (moins d'une demi-seconde) et qu'on ne peut pas falsifier : il est quasi impossible (probabilité inférieure à 1/2⁸⁰, voire inférieur à 1/2¹²⁸ selon les paramètres choisis pour réaliser la preuve, celle-ci étant alors plus lente à réaliser) de faire accepter une preuve de l'affirmation ci-dessus si le processus ne s'est pas déroulé conformément à ce qui est spécifié.

Dans la réalisation de la preuve, l'entité de preuve 1 utilise la possibilité de réaliser des preuves à divulgation nulle de connaissance pour cacher les données biométriques. Ainsi la preuve ne donne aucune information sur les données biométriques elles-mêmes.

Naturellement, l'étape (a) comprend avantageusement la vérification préalable que la donnée biométrique candidate et la donnée biométrique de référence coïncident (toujours sur l'entité de preuve 1, c'est-à-dire le terminal personnel de l'utilisateur), en comparant la donnée biométrique candidate et la donnée biométrique de référence.

En effet, de façon connue, la donnée biométrique candidate et la donnée biométrique de référence coïncident si leur distance selon une fonction de comparaison donnée est inférieure à un seuil prédéterminé.

Ainsi, la mise en œuvre de la comparaison comprend le calcul d'une distance entre les données, dont la définition varie en fonction de la nature des données biométriques considérées. Le calcul de la distance comprend le calcul d'un polynôme entre les composantes des données biométriques, et avantageusement le calcul d'un produit scalaire.

Par exemple, dans le cas où les données biométriques ont été obtenues à partir d'images d'iris, une distance classiquement utilisée pour comparer deux données est la distance de Hamming. Dans le cas où les données biométriques ont été obtenues à partir d'images du visage d'individu, il est courant d'utiliser la distance euclidienne.

Ce type de comparaison est connu de l'Homme du Métier et ne sera pas décrit plus en détails ci-avant.

L'individu est authentifié si la comparaison révèle un taux de similarité entre la donnée candidate et la donnée de référence excédant un certain seuil, dont la définition dépend de la distance calculée. Mathématiquement, *d(t_{ref,i},t_{c,i}) < τ.*

La preuve est alors plus précisément une preuve à divulgation nulle de connaissances du fait qu'étant données deux empreintes cryptographiques (et le cas échéant le nonce), il existe une donnée biométrique candidate (le cas échéant horodatée avec le nonce) et une donnée biométrique de référence ayant pour empreintes cryptographiques respectives les empreintes cryptographiques données, telles que leur distance selon la fonction de comparaison donnée est inférieure au seuil prédéterminé.

A noter que la preuve peut impliquer des paramètres publics supplémentaires par exemple si l'authentification est en vue d'une transaction : ces paramètres pourraient alors comporter un montant de la transaction, un identifiant du marchand, etc.

### Génération de preuve

De façon préférée, ladite preuve à divulgation nulle de connaissances est un objet cryptographique de type zkSNARK.

zkSNARK signifie « zero-knowledge Succinct Non Interactive ARgument of Knowledge », i.e. Argument de connaissance non interactive à divulgation nulle de connaissances. Il s'agit d'une primitive cryptographique construite autour de la notion de preuve. Les chercheurs en informatique théorique et en cryptographie se sont intéressés depuis longtemps à la notion de preuve. Il existe des résultats théoriques permettant de produire une preuve très courte et sécurisée d'un algorithme mais le temps pour réaliser cette preuve est hors de portée et le restera malgré l'augmentation de la puissance de calcul des ordinateurs. Une des raisons tient au pouvoir que l'on donne à l'entité qui réalise la preuve, l'entité de preuve 1 (appelée aussi le prouveur). Dans les résultats théoriques sur les preuves, le prouveur a une puissance de calcul infinie et les preuves restent sécurisées malgré cela.

La notion de preuve a ensuite été relâchée, le protocole ne cherchant à se protéger que d'un prouveur qui aurait une puissance de calcul importante mais bornée. Le résultat du protocole n'est plus une preuve mais un argument. C'est à partir de cette notion d'argument que les systèmes pratiques de calcul vérifiables se sont construits. Une exigence supplémentaire dans un système produisant un argument est que cet argument soit non interactif : le vérifieur et le prouveur n'ont pas besoin d'interagir pour produire l'argument.

Depuis 2010, des réalisations de zkSNARKs ont été présentées : il s'agit d'arguments dont la taille est courte (quelques éléments d'une courbe elliptique), qui ne nécessitent pas d'interactivité et qui de plus permettent au prouveur d'effectuer une preuve à divulgation nulle de connaissance i.e. la preuve ne contient aucune information non triviale sur les entrées fournies par le prouveur.

Il existe plusieurs protocoles qui réalisent concrètement des zkSNARKs, et l'homme du métier pourra les utiliser indifféremment dans le présent procédé :
- Le protocole Pinocchio déjà évoqué ;
- Le protocole Gepetto, présenté dans la publication « Craig Costello, Cedric Fournet, Jon Howell, Markulf Kohlweiss, Benjamin Kreuter, Michael Naehrig, Bryan Parno, and Samee Zahur, Geppetto: Versatile Verifiable Computation, in Proceedings of the IEEE Symposium on Security and Privacy, IEEE, 18 May 2015 », qui est une amélioration de Pinocchio
- Le protocole présenté dans la publication et suivantes « Eli Ben-Sasson, Alessandro Chiesa, Daniel Genkin, Eran Tromer, Madars Virza. SNARKs for C: Verifying Program Executions Succinctly and in Zero Knowledge. In Proceedings of the 33rd Annual International Cryptology Conference, CRYPTO '13, pages 90-108, 2013", implémenté open-source sous la forme d'une librairie appelée libsnark, optimisant le protocole produisant un zkSNARK dans Pinocchio en améliorant l'expressivité, c'est-à-dire le type de programmes ou d'algorithme qu'il est possible de vérifier.

Pour prendre l'exemple du protocole Pinocchio, ce protocole comporte plusieurs parties :
1. Un programme classique est traduit sous la forme d'un circuit arithmétique, c'est-à-dire d'un ensemble de relations entre les entrées et les sorties du programme traduites uniquement à l'aide d'additions et de multiplications d'éléments d'un corps fini. Il faut remarquer que tous les programmes peuvent en théorie être traduits sous cette forme mais qu'une partie seulement de ces programmes admet une traduction efficace sous forme de circuit.
2. Le circuit arithmétique obtenu est représenté efficacement à l'aide de trois familles de polynômes auxquelles s'ajoute un polynôme supplémentaire, appelé polynôme cible. Ces familles de polynômes forment des « Quadratic Arithmetic Programs » (QAPs). Elles encodent les relations entre les entrées et les sorties de chaque porte multiplicative du circuit, les relations des portes additives étant intégrées dans la première porte multiplicative qui suit dans le calcul.

Ces QAPs sont reliés au calcul vérifiable par le point suivant : un calcul y = C(x) est correct pour une entrée x si et seulement si toutes les relations décrivant le circuit arithmétique correspondant sont satisfaites en fixant comme valeur d'entrée x et comme valeur de sortie y.

Les QAPs permettent en quelque sorte de compresser toutes les contraintes à vérifier dans une seule relation à vérifier : un polynôme construit à partir de la valeur x et des trois familles du QAP doit diviser le polynôme cible.

3. Un protocole cryptographique prend alors en entrée un QAP associé à un programme, génère des clés d'évaluation et de vérification qui utilisent des courbes elliptiques pour cacher les relations polynômiales. Le polynôme prouvant que le calcul a été effectué correctement est alors calculé directement à l'aide des relations cachées dans la courbe elliptique. La relation de divisibilité se traduit uniquement à l'aide d'un nombre constant d'éléments de la courbe elliptique, c'est-à-dire que la preuve est de taille constante. La vérification de cette preuve est extrêmement rapide.

Le protocole permet de plus d'obtenir que des entrées du calcul fournies par le prouveur soient privées : il permet de cacher les valeurs du prouveur dans la réalisation de la preuve en les multipliant par un multiple du polynôme cible, ce qui ne modifie pas le fait que le polynôme « preuve » soit divisible par le polynôme cible.

Ce polynôme « preuve », quand il est caché dans une courbe elliptique constitue un zkSNARK.

Le protocole Pinocchio permet à celui qui réalise la preuve de cacher certaines des entrées du calcul dont il fait la preuve. Dans le présent cas, il s'agit de réaliser le calcul suivant :
Entrée : les empreintes cryptographiques de la donnée biométrique de référence *h_{1,i}* et candidate *h_{2,i}* (le cas échéant horodatée), le résultat de la comparaison des données biométriques candidate *t_{c,i}* et de référence *t_{ref,i}* (i.e. le booléen selon qu'elles coïncident ou non), le cas échéant le nonce *Nonce_{B,i},* et un vecteur d'initialisation IV (et d'autres données publiques si besoin).
Entrée privée : les données biométriques candidate *t_{c,i}* et de référence *t_{ref,i}.*
Sortie : la preuve π que le prouveur connaît bien des données biométriques *t_{ref,i}* et *t_{c,i}* qui se hachent (le cas échéant lorsque la donnée candidate est horodatée) en *h_{1,i}* et *h_{2,i}* (i.e. *h_{1,i} = H(t_{ref,i})* et *h_{2,i} = H(t_{c,i}*π*Nonce_{B,i})*) et dont le résultat de la comparaison est celui attendu.

A noter que sont connus des protocoles prévus pour la génération d'une preuve de bon déroulement d'une fonction de hachage, que l'homme du métier pourra directement utiliser même s'ils ne sont pas optimaux. La difficulté est d'obtenir un temps de calcul raisonnable pour réaliser la preuve et des tailles de clés d'évaluation et de vérification qui ne sont pas trop conséquentes.
- le protocole Zerocash (IEEE Security & Privacy 2014) de Ben-Sasson et al., propose la définition d'un circuit arithmétique pour vérifier la fonction de compression de SHA-256 qui comporte environ 30 000 portes multiplicatives. Ceci donne un temps de réalisation de preuve d'environ 5 secondes (par niveau de compression, vérifier la fonction de hachage entière qui comprend de nombreuses itérations de la fonction de compression sera nettement plus long), ce qui reste élevé et largement améliorable ;
- le protocole ZKBoo, présenté dans la publication « ZKBoo : faster zero-knowledge for boolean circuits » de Giacomelli, Madsen et Orlandi (Usenix Security 2016) » permet de meilleures performances (preuve en 50 ms, vérification en 70 ms) par itération de la fonction de compression, mais la taille de la preuve est conséquente (800 Ko) d'autant plus qu'elle ne semble avoir été mesurée que sur une application de la fonction de compression.

Présentement, il est préféré un système de preuve légère mais dont la génération prend quelques secondes, en particulier dans un cas de franchissement d'un portail de contrôle d'accès. Ainsi, en entrant dans le bâtiment l'utilisateur initie la génération de la preuve (par exemple, si l'équipement 1 est une carte à puce, il place son doigt sur le capteur d'empreinte digitale 13 pour mettre en œuvre les étapes (a1) et (a)), de sorte que la preuve soit prête au moment où il atteint le portail : comme on va le voir, la suite du procédé est quasiment instantanée.

### Suite du procédé

Dans une étape (b), l'entité de preuve 1 transmet à l'entité de vérification 2 ladite preuve à divulgation nulle de connaissance, l'empreinte cryptographique de la donnée biométrique candidate (le cas échéant horodatée), et l'empreinte cryptographique de la donnée biométrique de référence. Eventuellement, l'identifiant unique de l'utilisateur est également transmis si l'entité de preuve 1 en dispose, et potentiellement d'autres paramètres publics de la preuve si nécessaire (montant d'une transaction, identifiant d'un marchand, etc.), mais aucune autre donnée n'est transmise. On répète en particulier que les données biométriques ne sont pas transmises, et on constate ainsi que sur l'ensemble du procédé (d'authentification) aucune donnée biométrique n'est jamais échangée.

Dans une étape (c), les moyens de traitement de données 21 de l'entité de vérification 2 vérifient que la preuve à divulgation nulle de connaissance est valide (le cas échéant en utilisant la clé de vérification fournie lors de l'enrôlement), et que l'empreinte cryptographique reçue de la donnée biométrique de référence appartient audit ensemble d'empreintes cryptographiques de données biométriques de référence dont dispose l'entité de vérification 2 (en d'autres termes que l'utilisateur qui s'authentifie est bien l'un de ceux autorisés).

Si la preuve n'est pas valide, c'est que la donnée biométrique de référence et la donnée biométrique candidate ne coïncident pas, et donc qu'il s'agit potentiellement d'une usurpation d'identité. Si la preuve est valide mais que l'empreinte cryptographique reçue de la donnée biométrique de référence n'appartient pas audit ensemble d'empreintes cryptographiques de données biométriques de référence dont dispose l'entité de vérification 2, c'est que l'utilisateur est bien celui qu'il prétend être mais qu'il n'est pas autorisé (par exemple il a quitté la société et son accès a été révoqué).

Si c'est le cas, l'utilisateur est authentifié, et d'autres actions comme l'ouverture du portail de contrôle d'accès peuvent survenir.

A noter que si un identifiant unique est transmis, l'étape (c) peut comprendre la vérification que la paire identifiant unique/empreinte cryptographique correspond.

On voit bien qu'avec une telle solution, aucune donnée sensible n'est ni stockée du côté entité de vérification 2, ni transmise depuis l'entité de preuve 1 (seulement des empreintes cryptographiques inexploitables) et donc qu'une attaque ne compromettrait si la sécurité de la solution, ni les données personnelles des utilisateurs.

La vérification de la preuve à l'étape (c) n'est pas interactive (l'entité de vérification 2 n'a pas besoin de contacter le prouveur, i.e. l'entité de preuve 1) et se fait simplement en temps constant en vérifiant que la preuve est valide, ce qui démontre (à une probabilité infime près) à l'entité de vérification 2 que la propriété prétendue est vraie, i.e. que l'utilisateur dispose d'une donnée biométrique candidate et d'une donnée biométrique de référence qui coïncident. Il se convainc ainsi que l'identité de l'utilisateur est confirmée (et que personne n'a usurpé une identifié) malgré l'absence de toute donnée biométrique.

Grâce à la preuve la confidentialité peut être totale (puisque la génération de la preuve ne nécessite pas de communication) sans que l'entité de vérification 2 ne prenne de risque puisque la preuve lui garantit que l'entité de preuve dispose bien des données biométriques. La preuve permet également le cas échéant de garantir que l'entité de preuve disposait bien du nonce lors de la génération de l'empreinte cryptographique de la donnée biométrique candidate, i.e. de garantir sa fraicheur.

La preuve est courte (voir très courte - de l'ordre de quelques centaines d'octets), la transmettre avec les empreintes cryptographiques du document ne pose aucun problème de bande passante. De plus, la vérification de cette preuve est rapide (en temps constant, quelques dizaines de millièmes de secondes), ce qui n'augmente pas la charge de calcul au niveau des moyens de traitement de données 21 de l'entité de vérification 2, qui doit gérer beaucoup d'authentifications simultanées. La génération de la preuve est quant à elle plus lourde en termes de temps de calcul, mais comme l'étape (a) est mise en œuvre du côté premier équipement 1 qui est personnel (et n'est impliqué que dans l'authentification de son seul propriétaire), ce temps de calcul additionnel n'est pas problématique, et même bien accueilli par les utilisateurs qui n'ont pas de problème à consacrer quelques dizaines de secondes du temps de fonctionnement de leur terminal personnel si c'est pour pouvoir passer plus vite le portail de contrôle d'accès.

Ainsi le présent procédé est optimal aussi bien pour l'utilisateur que pour le prestataire (l'entreprise, l'aéroport, la douane, etc.).

### Ensemble d'équipements

Selon un deuxième aspect, est proposé un ensemble de traitement de données biométriques pour la mise en œuvre du procédé selon le premier aspect.

L'ensemble comprenant une entité de preuve 1 (premier équipement) une entité de vérification 2 (deuxième équipement) connectées, et le cas échant, une entité d'autorité 3 (troisième équipement).

L'entité de preuve 1, qui est typiquement un dispositif personnel de l'utilisateur comme un smartphone, comprend des moyens de traitement de données 11 configurés pour générer une preuve à divulgation nulle de connaissances du fait qu'une donnée biométrique candidate et une donnée biométrique de référence coïncident, et transmettre à l'entité de vérification 2 (seulement) ladite preuve à divulgation nulle de connaissance, une empreinte cryptographique de la donnée biométrique candidate (le cas échéant horodatée), et une empreinte cryptographique de la donnée biométrique de référence (et éventuellement un identifiant unique de l'utilisateur).

L'entité de preuve 1 comprend avantageusement des moyens d'acquisition biométrique 13 et ses moyens de traitement de données 11 sont configurés pour générer la donnée biométrique candidate à partir d'un trait biométrique fourni par les moyens d'acquisition biométrique 13 et l'empreinte cryptographique de la donnée biométrique candidate obtenue (le cas échéant de la donnée biométrique candidate horodatée en utilisant un nonce reçu).

L'entité de vérification 2 quant à elle ne dispose préférentiellement jamais des données biométriques de référence ou candidate, et seulement de l'ensemble des empreintes cryptographiques de données biométriques de référence des utilisateurs autorisés.

Elle comprend des moyens de traitement de données 21 configurés pour vérifier que la preuve à divulgation nulle de connaissance reçue est valide, et que l'empreinte cryptographique reçue de la donnée biométrique de référence correspond à une dudit ensemble dont dispose l'entité de vérification 2.

L'entité d'autorité 3 comprend et des moyens de traitement de données 31 configurés pour générer et transmettre à ladite entité de preuve la données biométrique de référence.

### Produit programme d'ordinateur

Selon un troisième et un quatrième aspects, l'invention concerne un produit programme d'ordinateur comprenant des instructions de code pour l'exécution (en particulier sur les moyens de traitement de données 11, 21, 31 des entités 1, 2, 3) d'un procédé selon le premier aspect de l'invention de traitement de données biométriques, ainsi que des moyens de stockage lisibles par un équipement informatique (une mémoire des entités 1, 2, 3) sur lequel on trouve ce produit programme d'ordinateur.

## Revendications

1. Procédé de traitement de données biométriques mis en œuvre par une entité de preuve (1) et une entité de vérification (2) connectées ;
l'entité de preuve (1) disposant d'une donnée biométrique candidate, d'une donnée biométrique de référence, d'une empreinte cryptographique de la donnée biométrique de référence, d'une empreinte cryptographique de la donnée biométrique candidate ; l'entité de vérification (2) disposant seulement d'un ensemble d'empreintes cryptographiques de données biométriques de référence d'utilisateurs autorisés ;
le procédé comprenant des étapes de :
(a) par des moyens de traitement de données (11) de l'entité de preuve (1), authentification ou identification biométrique d'un individu par vérification que la donnée biométrique candidate et la donnée biométrique de référence coïncident et génération d'une preuve à divulgation nulle de connaissances que des empreintes cryptographiques données sont des empreintes cryptographiques de données biométriques qui coïncident et qui sont en possession de l'entité de preuve ;
(b) transmission à l'entité de vérification (2) de ladite preuve à divulgation nulle de connaissance, de l'empreinte cryptographique de la donnée biométrique candidate, et de l'empreinte cryptographique de la donnée biométrique de référence ;
(c) vérification par des moyens de traitement de données (21) de l'entité de vérification (2) que :
- la preuve à divulgation nulle de connaissance est valide, ce qui démontre à l'entité de vérification qu'étant données l'empreinte cryptographique de la donnée biométrique de référence et l'empreinte cryptographique de la donnée biométrique candidate, l'entité de preuve est en possession de données biométriques qui coïncident et dont les empreintes cryptographiques respectives sont l'empreinte cryptographique de la donnée biométrique de référence et l'empreinte cryptographique de la donnée biométrique candidate; et
- l'empreinte cryptographique reçue de la donnée biométrique de référence appartient audit ensemble d'empreintes cryptographiques de données biométriques de référence dont dispose l'entité de vérification (2).

2. Procédé selon la revendication 1, dans lequel l'entité de preuve (1) ne dispose initialement que de la donnée biométrique de référence et de l'empreinte cryptographique de la donnée biométrique de référence, le procédé comprenant la mise en œuvre par les moyens de traitement de données (11) de l'entité de preuve d'une étape préalable (a1) de :
- génération de la donnée biométrique candidate à partir d'un trait biométrique fourni par des moyens d'acquisition biométrique (13) de l'entité de preuve (1), et
- génération de l'empreinte cryptographique de la donnée biométrique candidate obtenue.

3. Procédé selon la revendication 2, dans lequel l'étape (a1) comprend l'horodatage par les moyens de traitement de données (11) de l'entité de preuve (1) de la donnée biométrique candidate en utilisant un marqueur temporel, l'empreinte cryptographie générée à l'étape (a1) et transmise à l'étape (b) étant celle de la donnée biométrique candidate horodatée ;

4. Procédé selon la revendication 3, dans lequel ledit marqueur temporel est un nonce généré par les moyens de traitement de données (21) de l'entité de vérification (2) et transmis à l'entité de preuve (1).

5. Procédé selon l'une des revendications 3 et 4, dans lequel ladite preuve à divulgation nulle de connaissances est une preuve à divulgation nulle de connaissances du fait qu'étant données deux empreintes cryptographiques et un marqueur temporel, il existe une donnée biométrique de référence et une donnée biométrique candidate telles que :
- La donnée biométrique de référence et la donnée biométrique candidate horodatée en utilisant le marqueur temporel donné ont pour empreintes cryptographiques respectives les empreintes cryptographiques données,
- La donnée biométrique de référence et la donnée biométrique candidate coïncident.

6. Procédé selon l'une des revendications 2 à 5, comprenant une étape encore antérieure (a0) mise en œuvre de :
- génération par des moyens de traitement de données (31) d'une entité d'autorité (3) de ladite donnée biométrique de référence à partir d'un trait biométrique de référence, et sa transmission à l'entité de preuve (1) ;
- Ajout audit ensemble d'empreintes cryptographiques de données biométriques de référence d'utilisateurs autorisés de l'empreinte cryptographique de la donnée biométrique de référence générée.

7. Procédé selon la revendication 6, dans lequel l'étape (a0) comprend en outre la génération par les moyens de traitement de données (31) de l'entité d'autorité (3) de l'empreinte cryptographique de ladite donnée biométrique de référence générée, et sa transmission à l'entité de preuve (1) ; et la retransmission par l'entité de preuve (1) à l'entité de vérification de ladite empreinte cryptographique générée de ladite donnée biométrique de référence générée, pour ajout audit ensemble d'empreintes cryptographiques de données biométriques de référence d'utilisateurs autorisés.

8. Procédé selon l'une des revendications 1 à 7, dans lequel l'entité de preuve (1) est un équipement électronique personnel à un individu faisant partie des utilisateurs autorisés, de type terminal mobile ou carte à puce, la donnée biométrique de référence stockée dans l'entité de preuve (1) étant celle dudit individu.

9. Procédé selon la revendication 8, dans lequel chacun desdits utilisateurs autorisés dispose de sa propre entité de preuve (1).

10. Procédé selon l'une des revendications 8 et 9 en combinaison avec la revendication 6, dans lequel le trait biométrique de référence à partir duquel ladite donnée biométrique de référence est générée à l'étape (a0) est celui de l'individu ayant l'entité de preuve (1).

11. Procédé selon l'une des revendications 1 à 10, dans lequel la preuve à divulgation nulle de connaissances est un objet cryptographique de type zkSNARK.

12. Ensemble d'équipements de traitement de données biométriques comprenant une entité de preuve (1) et une entité de vérification (2) connectées, **caractérisé en ce que** :
- l'entité de preuve (1) dispose d'une donnée biométrique candidate, d'une donnée biométrique de référence, d'une empreinte cryptographique de la donnée biométrique de référence, d'une empreinte cryptographique de la donnée biométrique candidate et comprend des moyens de traitement de données (11) configurés pour procéder à une authentification ou identification biométrique d'un individu par vérification que la donnée biométrique candidate et la donnée biométrique de référence coïncident et pour générer une preuve à divulgation nulle de connaissances que des empreintes cryptographiques données sont des empreintes cryptographiques de données biométriques qui coïncident et qui sont en possession de l'entité de preuve , et transmettre à l'entité de vérification (2) ladite preuve à divulgation nulle de connaissance, l'empreinte cryptographique de la donnée biométrique candidate, et l'empreinte cryptographique de la donnée biométrique de référence ;
- l'entité de vérification (2) comprend des moyens de traitement de données (21) configurés pour vérifier :
- que la preuve à divulgation nulle de connaissance est valide, ce qui démontre à l'entité de vérification qu'étant données l'empreinte cryptographique de la donnée biométrique de référence et l'empreinte cryptographique de la donnée biométrique candidate, l'entité de preuve est en possession de données biométriques qui coïncident et dont les empreintes cryptographiques respectives sont l'empreinte cryptographique de la donnée biométrique de référence et l'empreinte cryptographique de la donnée biométrique candidate, et
- que l'empreinte cryptographique reçue de la donnée biométrique de référence appartient à un ensemble d'empreintes cryptographiques de données biométriques de référence d'utilisateurs autorisés dont dispose l'entité de vérification (2).

13. Ensemble selon la revendication 12, dans lequel l'entité de preuve (1) comprend des moyens d'acquisition biométrique (13), les moyens de traitement de données (11) de l'entité de preuve étant en outre configurés pour générer la donnée biométrique candidate à partir d'un trait biométrique fourni par les moyens d'acquisition biométrique (13) et l'empreinte cryptographique de la donnée biométrique candidate obtenue.

14. Produit programme d'ordinateur comprenant des instructions de code pour l'exécution d'un procédé selon l'une des revendications 1 à 11 de traitement de données biométriques, lorsque ledit procédé est exécuté sur un ordinateur.

15. Moyen de stockage lisible par un équipement informatique sur lequel un produit programme d'ordinateur comprend des instructions de code pour l'exécution d'un procédé selon l'une des revendications 1 à 11 de traitement de données biométriques.

## Patentansprüche

1. Verfahren zur Verarbeitung biometrischer Daten, implementiert durch eine Beweisentität (1) und eine Verifizierungsentität (2), die miteinander verbunden sind; wobei die Beweisentität (1) über einen biometrischen Datenkandidaten, biometrische Referenzdaten, einen kryptographischen Hashwert der biometrischen Referenzdaten und einen kryptographischen Hashwert des biometrischen Datenkandidaten verfügt; wobei die Verifizierungsentität (2) lediglich über einen Satz von kryptographischen Hashwerten biometrischer Referenzdaten autorisierter Benutzer verfügt; das Verfahren umfassend die Schritte:
(a) durch Datenverarbeitungsmittel (11) der Beweisentität (1), biometrische Authentifizierung oder Identifizierung einer Person durch Verifizieren, dass der biometrische Datenkandidat und die biometrischen Referenzdaten übereinstimmen, und Erzeugen eines Zero-Knowledge-Beweises, dass gegebene kryptographische Hashwerte kryptographische Hashwerte von biometrischen Daten sind, die übereinstimmen und im Besitz der Beweisentität sind;
(b) Übermittlung des besagten Zero-Knowledge-Beweises, des kryptographischen Hashwerts des biometrischen Datenkandidaten und des kryptographischen Hashwerts der biometrischen Referenzdaten an die Verifizierungsentität (2);
(c) Verifizieren durch Datenverarbeitungsmittel (21) der Verifizierungsentität (2), dass:
• der Zero-Knowledge-Beweis gültig ist, was der Verifizierungsentität gegenüber nachweist, dass unter Berücksichtigung des kryptographischen Hashwerts der biometrischen Referenzdaten und des kryptographischen Hashwerts des biometrischen Datenkandidaten die Beweisentität im Besitz von biometrischen Daten ist, die übereinstimmen und deren jeweilige kryptographische Hashwerte der kryptographische Hashwert der biometrischen Referenzdaten und der kryptographische Hashwert des biometrischen Datenkandidaten sind; und
• der empfangene kryptographische Hashwert der biometrischen Referenzdaten zu dem besagten Satz von kryptographischen Hashwerten biometrischer Referenzdaten gehört, über den die Verifizierungsentität (2) verfügt.

2. Verfahren nach Anspruch 1, wobei die Beweisentität (1) anfänglich nur über die biometrischen Referenzdaten und den kryptographischen Hashwert der biometrischen Referenzdaten verfügt, wobei das Verfahren die Durchführung eines vorgeschalteten Schritts (a1) durch die Datenverarbeitungsmittel (11) der Beweisentität umfasst, bestehend aus:
• Erzeugen des biometrischen Datenkandidaten aus einem biometrischen Merkmal, das durch biometrische Erfassungsmittel (13) der Beweisentität (1) bereitgestellt wird, und
• Erzeugen des kryptographischen Hashwerts des erhaltenen biometrischen Datenkandidaten.

3. Verfahren nach Anspruch 2, wobei Schritt (a1) den Zeitstempel des biometrischen Datenkandidaten durch die Datenverarbeitungsmittel (11) der Beweisentität (1) unter Verwendung einer Zeitmarkierung umfasst, wobei der in Schritt (a1) erzeugte und in Schritt (b) übermittelte kryptographische Hashwert derjenige des zeitgestempelten biometrischen Datenkandidaten ist.

4. Verfahren nach Anspruch 3, wobei die besagte Zeitmarkierung eine Nonce ist, die durch die Datenverarbeitungsmittel (21) der Verifizierungsentität (2) erzeugt und an die Beweisentität (1) übermittelt wird.

5. Verfahren nach einem der Ansprüche 3 und 4, wobei der besagte Zero-Knowledge-Beweis ein Zero-Knowledge-Beweis dafür ist, dass unter Berücksichtigung von zwei kryptographischen Hashwerten und einer Zeitmarkierung biometrische Referenzdaten und ein biometrischer Datenkandidat existieren, so dass:
• die biometrischen Referenzdaten und der unter Verwendung der gegebenen Zeitmarkierung zeitgestempelte biometrische Datenkandidat als jeweilige kryptographische Hashwerte die gegebenen kryptographischen Hashwerte aufweisen,
• die biometrischen Referenzdaten und der biometrische Datenkandidat übereinstimmen.

6. Verfahren nach einem der Ansprüche 2 bis 5, umfassend einen noch früheren implementierten Schritt (a0):
• Erzeugen der besagten biometrischen Referenzdaten aus einem biometrischen Referenzmerkmal durch Datenverarbeitungsmittel (31) einer Autoritätsentität (3) und deren Übermittlung an die Beweisentität (1);
• Hinzufügen des kryptographischen Hashwerts der erzeugten biometrischen Referenzdaten zu dem besagten Satz von kryptographischen Hashwerten biometrischer Referenzdaten autorisierter Benutzer.

7. Verfahren nach Anspruch 6, wobei Schritt (a0) ferner das Erzeugen des kryptographischen Hashwerts der besagten erzeugten biometrischen Referenzdaten durch die Datenverarbeitungsmittel (31) der Autoritätsentität (3) und deren Übermittlung an die Beweisentität (1) umfasst; sowie die Rückübermittlung des besagten erzeugten kryptographischen Hashwerts der besagten erzeugten biometrischen Referenzdaten durch die Beweisentität (1) an die Verifizierungsentität zwecks Hinzufügen zu dem besagten Satz von kryptographischen Hashwerten biometrischer Referenzdaten autorisierter Benutzer.

8. Verfahren nach einem der Ansprüche 1 bis 7, wobei die Beweisentität (1) ein persönliches elektronisches Gerät einer Person ist, die zu den autorisierten Benutzern gehört, vom Typ mobiles Endgerät oder Chipkarte, wobei die in der Beweisentität (1) gespeicherten biometrischen Referenzdaten diejenigen der besagten Person sind.

9. Verfahren nach Anspruch 8, wobei jeder der besagten autorisierten Benutzer über seine eigene Beweisentität (1) verfügt.

10. Verfahren nach einem der Ansprüche 8 und 9 in Kombination mit Anspruch 6, wobei das biometrische Referenzmerkmal, aus dem die besagten biometrischen Referenzdaten in Schritt (a0) erzeugt werden, dasjenige der Person ist, welche die Beweisentität (1) besitzt.

11. Verfahren nach einem der Ansprüche 1 bis 10, wobei der Zero-Knowledge-Beweis ein kryptographisches Objekt vom Typ zkSNARK ist.

12. System von Vorrichtungen zur Verarbeitung biometrischer Daten, umfassend eine Beweisentität (1) und eine Verifizierungsentität (2), die miteinander verbunden sind, **dadurch gekennzeichnet, dass**:
• die Beweisentität (1) über einen biometrischen Datenkandidaten, biometrische Referenzdaten, einen kryptographischen Hashwert der biometrischen Referenzdaten, einen kryptographischen Hashwert des biometrischen Datenkandidaten verfügt und Datenverarbeitungsmittel (11) umfasst, die dafür konfiguriert sind, eine biometrische Authentifizierung oder Identifizierung einer Person durch Verifizieren, dass der biometrische Datenkandidat und die biometrischen Referenzdaten übereinstimmen, durchzuführen und einen Zero-Knowledge-Beweis zu erzeugen, dass gegebene kryptographische Hashwerte kryptographische Hashwerte von biometrischen Daten sind, die übereinstimmen und im Besitz der Beweisentität sind, und den besagten Zero-Knowledge-Beweis, den kryptographischen Hashwert des biometrischen Datenkandidaten und den kryptographischen Hashwert der biometrischen Referenzdaten an die Verifizierungsentität (2) zu übermitteln;
• die Verifizierungsentität (2) Datenverarbeitungsmittel (21) umfasst, die konfiguriert sind zum Verifizieren:
∘ dass der Zero-Knowledge-Beweis gültig ist, was der Verifizierungsentität gegenüber nachweist, dass unter Berücksichtigung des kryptographischen Hashwerts der biometrischen Referenzdaten und des kryptographischen Hashwerts des biometrischen Datenkandidaten die Beweisentität im Besitz von biometrischen Daten ist, die übereinstimmen und deren jeweilige kryptographische Hashwerte der kryptographische Hashwert der biometrischen Referenzdaten und der kryptographische Hashwert des biometrischen Datenkandidaten sind, und
∘ dass der empfangene kryptographische Hashwert der biometrischen Referenzdaten zu einem Satz von kryptographischen Hashwerten biometrischer Referenzdaten autorisierter Benutzer gehört, über den die Verifizierungsentität (2) verfügt.

13. System nach Anspruch 12, wobei die Beweisentität (1) biometrische Erfassungsmittel (13) umfasst, wobei die Datenverarbeitungsmittel (11) der Beweisentität ferner dafür konfiguriert sind, den biometrischen Datenkandidaten aus einem durch die biometrischen Erfassungsmittel (13) bereitgestellten biometrischen Merkmal und den kryptographischen Hashwert des erhaltenen biometrischen Datenkandidaten zu erzeugen.

14. Computerprogrammprodukt, umfassend Code-Anweisungen zur Ausführung eines Verfahrens nach einem der Ansprüche 1 bis 11 zur Verarbeitung biometrischer Daten, wenn das besagte Verfahren auf einem Computer ausgeführt wird.

15. Computerlesbares Speichermedium, auf dem ein Computerprogrammprodukt Code-Anweisungen zur Ausführung eines Verfahrens zur Verarbeitung biometrischer Daten nach einem der Ansprüche 1 bis 11 umfasst.

## Claims

1. A biometric data processing method implemented by a connected prover entity (1) and verification entity (2); the prover entity (1) having candidate biometric data, reference biometric data, a cryptographic hash of the reference biometric data, and a cryptographic hash of the candidate biometric data; the verification entity (2) having only a set of cryptographic hashes of reference biometric data of authorized users; the method comprising the steps of:
(a) by data processing means (11) of the prover entity (1), biometric authentication or identification of an individual by verifying that the candidate biometric data and the reference biometric data match, and generating a zero-knowledge proof that given cryptographic hashes are cryptographic hashes of biometric data that match and are in the possession of the prover entity;
(b) transmitting to the verification entity (2) said zero-knowledge proof, the cryptographic hash of the candidate biometric data, and the cryptographic hash of the reference biometric data;
(c) verifying by data processing means (21) of the verification entity (2) that:
the zero-knowledge proof is valid, which demonstrates to the verification entity that, given the cryptographic hash of the reference biometric data and the cryptographic hash of the candidate biometric data, the prover entity is in possession of matching biometric data whose respective cryptographic hashes are the cryptographic hash of the reference biometric data and the cryptographic hash of the candidate biometric data; and
the received cryptographic hash of the reference biometric data belongs to said set of cryptographic hashes of reference biometric data available to the verification entity (2).

2. The method according to claim 1, wherein the prover entity (1) initially has only the reference biometric data and the cryptographic hash of the reference biometric data, the method comprising the implementation by the data processing means (11) of the prover entity of a preliminary step (a1) of:
- generating candidate biometric data from a biometric trait provided by biometric acquisition means (13) of the prover entity (1), and
- generating the cryptographic hash of the obtained candidate biometric data.

3. The method according to claim 2, wherein step (a1) comprises time-stamping by the data processing means (11) of the prover entity (1) of the candidate biometric data using a time marker, the cryptographic hash generated in step (a1) and transmitted in step (b) being that of the time-stamped candidate biometric data.

4. The method according to claim 3, wherein said time marker is a nonce generated by the data processing means (21) of the verification entity (2) and transmitted to the prover entity (1).

5. The method according to one of claims 3 and 4, wherein said zero-knowledge proof is a zero-knowledge proof of the fact that, given two cryptographic hashes and a time marker, there exist reference biometric data and candidate biometric data such that:
- The reference biometric data and the candidate biometric data time-stamped using the given time marker have the given cryptographic hashes as their respective cryptographic hashes,
- The reference biometric data and the candidate biometric data match.

6. The method according to one of claims 2 to 5, comprising a further prior step (a0) implemented by:
- generating by data processing means (31) of an authority entity (3) said reference biometric data from a reference biometric trait, and transmitting it to the prover entity (1);
- adding the cryptographic hash of the generated reference biometric data to said set of cryptographic hashes of reference biometric data of authorized users.

7. The method according to claim 6, wherein step (a0) further comprises generating by the data processing means (31) of the authority entity (3) the cryptographic hash of said generated reference biometric data, and transmitting it to the prover entity (1); and the retransmission by the prover entity (1) to the verification entity of said generated cryptographic hash of said generated reference biometric data, for addition to said set of cryptographic hashes of reference biometric data of authorized users.

8. The method according to one of claims 1 to 7, wherein the prover entity (1) is an individual's personal electronic equipment belonging to the authorized users, of the mobile terminal or smart card type, the reference biometric data stored in the prover entity (1) being that of said individual.

9. The method according to claim 8, wherein each of said authorized users has their own prover entity (1).

10. The method according to one of claims 8 and 9 in combination with claim 6, wherein the reference biometric trait from which said reference biometric data is generated in step (a0) is that of the individual having the prover entity (1).

11. The method according to one of claims 1 to 10, wherein the zero-knowledge proof is a cryptographic object of the zkSNARK type.

12. A set of biometric data processing equipment comprising a connected prover entity (1) and verification entity (2), **characterized in that**:
- the prover entity (1) has candidate biometric data, reference biometric data, a cryptographic hash of the reference biometric data, a cryptographic hash of the candidate biometric data, and comprises data processing means (11) configured to perform a biometric authentication or identification of an individual by verifying that the candidate biometric data and the reference biometric data match, and to generate a zero-knowledge proof that given cryptographic hashes are cryptographic hashes of biometric data that match and are in possession of the prover entity, and to transmit to the verification entity (2) said zero-knowledge proof, the cryptographic hash of the candidate biometric data, and the cryptographic hash of the reference biometric data;
- the verification entity (2) comprises data processing means (21) configured to verify:
- that the zero-knowledge proof is valid, which demonstrates to the verification entity that, given the cryptographic hash of the reference biometric data and the cryptographic hash of the candidate biometric data, the prover entity is in possession of matching biometric data whose respective cryptographic hashes are the cryptographic hash of the reference biometric data and the cryptographic hash of the candidate biometric data, and
- that the received cryptographic hash of the reference biometric data belongs to a set of cryptographic hashes of reference biometric data of authorized users available to the verification entity (2).

13. The set according to claim 12, wherein the prover entity (1) comprises biometric acquisition means (13), the data processing means (11) of the prover entity being further configured to generate the candidate biometric data from a biometric trait provided by the biometric acquisition means (13) and the cryptographic hash of the obtained candidate biometric data.

14. A computer program product comprising code instructions for executing a biometric data processing method according to one of claims 1 to 11, when said method is executed on a computer.

15. A storage medium readable by computer equipment on which a computer program product comprises code instructions for executing a biometric data processing method according to one of claims 1 to 11.
